# EUROPEAN PATENT APPLICATION

(11) **EP 4 734 134 A1**
(43) Date of publication of application: **29.04.2026**
(21) Application number: 25211544.9
(22) Date of filing: 28.10.2025
(51) Int. Cl.: H01G 4/32, G21H 1/00, G21H 1/02, G21H 1/04

(54) **ELECTRODE ASSEMBLY AND RADIOISOTOPE BATTERY COMPRISING THE SAME**

(30) Priority: 28.10.2024 KR 20240148743; 27.10.2025 KR 20250157159
(71) Applicant: LG Energy Solution, Ltd., Seoul 07335 (KR)
(72) Inventor: KIM, Dong Myung, 07335 Seoul (KR); KIM, Je Young, 34122 Daejeon (KR); SHIN, Dong Myung, 07335 Seoul (KR)
(74) Representative: BCKIP Part mbB

(57) **Abstract**

Provided is an electrode assembly for a nuclear battery, which is a jelly roll type electrode assembly wound around a central axis in one direction. The electrode assembly (10) comprises:

- a first electrode (111), a second electrode (112), an energy conversion layer (130) provided between the first electrode (111) and the second electrode (112), and

- a radioactive source (120) provided in a space between the first electrode (111) and the energy conversion layer (130), and/or

- a space between the second electrode (112) and the energy conversion layer (130), wherein

- the electrode assembly (10) is a jelly roll type electrode assembly in which the first electrode (111), the second electrode (112), the energy conversion layer (130) and the radioactive source (120) are laminated and wound in one direction around a central axis (C) of the electrode assembly.

## Description

### CROSS-REFERENCE TO RELATED APPLICATIONS

This application claims benefit of Korean Patent Application Nos. 10-2024-0148743, filed on October 28, 2024, and 10-2025-0157159, filed on October 27, 2025, at the Korean Intellectual Property Office.

### BACKGROUND

### 1. Field of the Invention

The present invention relates to an electrode assembly and a radioisotope battery comprising the same, as well as a battery pack.

### 2. Description of the Related Art

A radio-isotope is an element that spontaneously decays into a stable isotope while emitting radiation. Alpha decay, beta decay, and gamma decay have been known as the ways in which a radio-isotope decays. A radio-isotope emits alpha rays, beta rays, or gamma rays while it decays, depending on the type. Meanwhile, the time it takes for the amount of radioactivity to decrease to half of its initial amount as a radio-isotope decays is called a half-life period. The type of radiation emitted by decay and the half-life period are determined, depending on the types of radio-isotopes.

In general, a radioisotope battery is a battery that uses radiation emitted from a radio-isotope, and the radiation is absorbed by a P-N junction semiconductor, thereby forming electron-hole pairs in the depletion region. The generated electrons and holes enabling use of the radioisotope battery as an electric power source. That is, the radioisotope battery is a battery that converts nuclear decay energy of a radio-isotope into electrical energy to use the electrical energy as an electrical power source.

### SUMMARY

Aspects provide an electrode assembly capable of producing high-density power that can be applied to electronic products requiring high power by a radioisotope battery comprising the same, and a battery pack comprising the radioisotope battery.

According to the present invention, the above objects are achieved by the features defined in independent claims 1, 14, and 15. Further preferred features are defined in dependent claims.

According to an aspect, there is provided an electrode assembly comprising: a first electrode, a second electrode, an energy conversion layer provided between the first electrode and the second electrode, and a radioactive source provided in a space between the first electrode and the energy conversion layer, and/or a space between the second electrode and the energy conversion layer. Herein, the electrode assembly may be a jelly roll type electrode assembly in which the first electrode, the second electrode, the energy conversion layer and the radioactive source are laminated and wound in one direction around a central axis of the electrode assembly.

The electrode assembly may further comprise an insulating layer on a surface of at least one of the first electrode and the second electrode, not facing the radioactive source.

Preferably, the electrode assembly may further comprise a central member having the central axis. Herein, the first electrode, the second electrode, the energy conversion layer and the radioactive source may be laminated and wound in one direction around the central member.

Optionally, at least one of the first electrode and the second electrode may comprise a groove on a surface facing the energy conversion layer. Preferably, the radioactive source may be provided in the groove.

Exemplarily, the groove may be provided in plurality. Furthermore, the plurality of grooves may be arranged spaced apart from each other.

Moreover, the radioactive source may be provided on a surface of at least one of the first electrode and the second electrode facing the energy conversion layer.

Besides, the electrode assembly may further comprise: a third electrode provided between the energy conversion layer and the radioactive source.

Possibly, the energy conversion layer may comprise a first energy conversion layer including a type-I semiconductor adjacent to the first electrode, and a second energy conversion layer including a type-II semiconductor adjacent to the second electrode.

Optionally, one of the type-I and type-II semiconductor may be a P-type semiconductor and the other of the type-I and type-II semiconductor may be an N-type semiconductor, such that a P-N junction is defined at an interface between the P-type semiconductor and the N-type semiconductor.

Exemplarily, the first electrode may be in contact with at least a portion of the first energy conversion layer, and the second electrode may be in contact with at least a portion of the second energy conversion layer.

Preferably, the first electrode and the second electrode may respectively comprise a first electrode tab and a second electrode tab on at least a portion of a surface opposite to the surface facing the energy conversion layer.

The radioactive source may be in contact with the first energy conversion layer forming an interface with an undulating profile.

The electrode assembly may further comprise: a protective layer disposed on a surface of the first electrode and/or the second electrode, not facing the radioactive source.

According to another aspect, there is provided a radioisotope battery, comprising: the electrode assembly according to the present invention; a housing accommodating the electrode assembly; and a cap assembly provided to cover an open upper portion of the housing.

According to yet another aspect, there is provided a battery pack comprising the radioisotope battery according to the present invention.

According to the present invention, it is possible to provide an electrode assembly that can be applied to electronic products requiring high power by producing high-density power, and a radioisotope battery comprising the same, and may furthermore provide a battery pack comprising the radioisotope battery, and/or a power device.

### BRIEF DESCRIPTION OF THE FIGURES

The drawings provided in the present disclosure are based on example embodiments of the present disclosure, and the ratios of the width, length, or thickness (or height) of components are provided for a detailed description of the present disclosure and may differ from the actual dimensions. In addition, each axis in coordinate systems illustrated in the drawings may be perpendicular to each other, and a direction pointed by an arrow may be a + direction, and a direction (direction rotated by 180°) opposite to the direction pointed by an arrow may be a - direction.
FIG. 1 is a perspective view illustrating at least a portion of an electrode assembly according to an example embodiment.
FIG. 2 is a perspective view illustrating at least a portion of the electrode assembly according to an example embodiment.
FIG. 3 is a perspective view illustrating at least a portion of the electrode assembly according to an example embodiment.
FIG. 4 is a cross-sectional view illustrating at least a portion of a first electrode according to an example embodiment.
FIG. 5 is a cross-sectional view illustrating at least a portion of a second electrode according to an example embodiment.
FIG. 6 is a cross-sectional view illustrating at least a portion of the first electrode according to an example embodiment.
FIG. 7 is a cross-sectional view illustrating at least a portion of a second electrode according to an example embodiment.
FIG. 8 is a plan view illustrating at least a portion of the first electrode according to an example embodiment.
FIG. 9 is a plan view illustrating at least a portion of the first electrode according to an example embodiment.
FIG. 10 is a plan view illustrating at least a portion of the first electrode according to an example embodiment.
FIG. 11 is a plan view illustrating at least a portion of the first electrode according to an example embodiment.
FIG. 12 is a plan view illustrating at least a portion of the first electrode according to an example embodiment.
FIG. 13 is a perspective view illustrating at least a portion of the electrode assembly according to an example embodiment.
FIG. 14 is a perspective view illustrating at least a portion of the electrode assembly according to an example embodiment.
FIG. 15 is a perspective view illustrating at least a portion of the electrode assembly according to an example embodiment.
FIG. 16 is a perspective view illustrating at least a portion of the electrode assembly according to an example embodiment.
FIG. 17 is a perspective view illustrating at least a portion of the electrode assembly according to an example embodiment.
FIG. 18 is a perspective view illustrating at least a portion of a radioisotope battery according to an example embodiment.
FIG. 19 is a perspective view illustrating at least a portion of the radioisotope battery according to an example embodiment.
FIGS. 20A to 20E are cross-sectional views illustrating interface shapes of a first energy conversion layer and a second energy conversion layer according to one embodiment.
FIG. 21 is a cross-sectional view illustrating at least a portion of the electrode assembly according to one embodiment.
FIG. 22 is a cross-sectional view illustrating at least a portion of the electrode assembly according to one embodiment.
FIG. 23 is a cross-sectional view illustrating at least a portion of the electrode assembly according to one embodiment.
FIG. 24 is a perspective view illustrating at least a portion of the electrode assembly according to one embodiment.

### DETAILED DESCRIPTION

Before describing the present disclosure, the terms or terminologies used herein and claims may not be construed as common meanings or the meanings in dictionaries. Further, the inventor(s) may appropriately define the concepts of terms in accordance with the principle that the inventor(s) can describe their invention in the best possible way, and the terms should be interpreted in a manner consistent with the technical idea of the present invention. The example embodiments described in this specification and the structures illustrated in the drawings are merely the most preferred example embodiments of the present invention and may not represent the entire technical idea of the present invention. Accordingly, as of the filing date of the present disclosure, various equivalents and modifications that can replace these may exist.

The same reference numbers or symbols described in each drawing attached to this specification may indicate parts or components that perform substantially the same function. For the convenience of description and understanding, the same reference numbers or symbols may be used in different example embodiments. In other words, even if components having the same reference numbers are illustrated in multiple drawings, all the multiple drawings may not mean an example embodiment.

In the following description, singular forms are intended to include plural forms unless the context clearly indicates otherwise. It will be further understood that the terms "comprise" or "constitute" used in this specification specify the presence of stated features, steps, operations, components, parts, or a combination thereof, but do not preclude the presence or addition of one or more other features, numerals, steps, operations, components, parts, or a combination thereof.

In addition, in the following description, terms such as upper side, upper portion, lower side, lower portion, side, front, and rear are based on the directions illustrated in the drawings, and they may be expressed differently if the direction of the subject changes.

In addition, in the specification and the claims, terms including ordinal numbers such as "first" and "second" may be used to distinguish between components. These ordinal numbers may be used to distinguish the same or similar components from each other, and the meaning of the terms should not be restrictively construed by the use of these ordinal numbers. As an example, components combined with these ordinal numbers should not be limited in order of use or arrangement by the ordinal numbers. If necessary, the respectively ordinal numbers may be interchangeably used.

In this specification, a battery may be a term that collectively also refers to units of battery storage devices, such as a battery cell, or a battery module or a battery pack including the battery cells, or one or more sub-units thereof.

Hereinafter, example embodiments of the present invention are described in detail with reference to the accompanying drawings. However, the present invention may not be limited to the proposed example embodiments. For example, those skilled in the art who understand the present disclosure may propose other example embodiments that fall within the scope of the present invention by adding, modifying, or removing components, and such example embodiments shall also be considered to fall within the scope of the present invention as defined by the claims. The shapes and sizes of the components in the drawings may be exaggerated for more clear explanation.

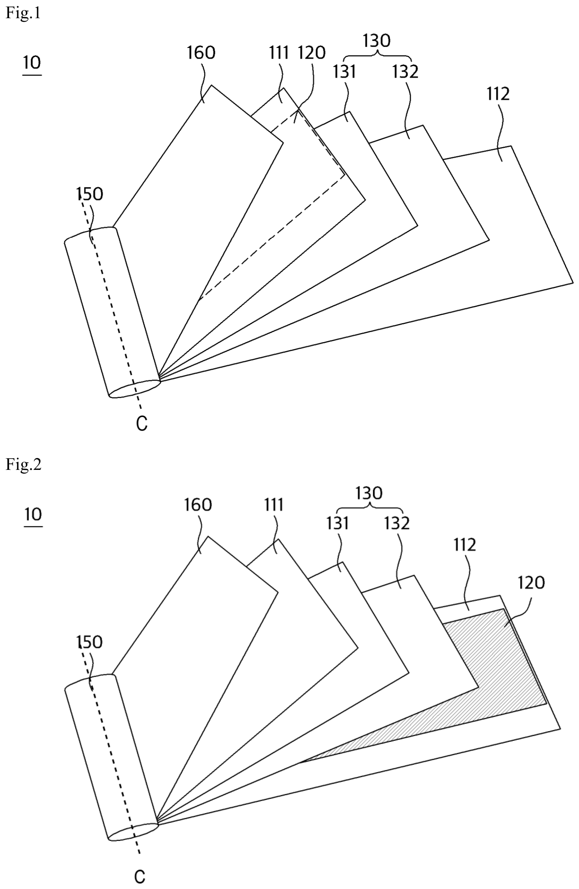

FIG. 1 is a perspective view illustrating an electrode assembly 10 according to an example embodiment.

In one example, the electrode assembly 10 is a jelly roll type electrode assembly comprising: a first electrode 111; a second electrode 112; an energy conversion layer 130 provided between the first electrode 111 and the second electrode 112; and a radioactive source 120 provided in at least one of a space between the first electrode 111 and the energy conversion layer 130 and a space between the second electrode 112 and the energy conversion layer 130. In this jelly roll type electrode assembly 10, the first electrode 111, the second electrode 112, the energy conversion layer 130 and the radioactive source 120 are laminated and wound in one direction around a central axis C like a jelly roll. As shown in FIG. 1, the electrodes 111, 112, the energy conversion layer 130 and the radioactive source 120 may advantageously be wound around a central member 150 having the central axis C, and the electrode assembly 10 may include an insulating layer 160 on a surface of at least one of the first electrode 111 and the second electrode 112 that does not face the radioactive source 120. However, as jelly rolls may or may not contain a separate center core, also the wound electrode assembly 10 may or may not include the central member 150.

In the case where the radioactive source is stacked between the electrode and the energy conversion layer, as in the electrode assembly according to one embodiment of the present invention, compared to the electrode assembly in which the radioactive source is arranged outside the electrode and the energy conversion layer, the radiation emitted from the radioactive source travels a relatively shorter distance to the energy conversion layer and the amount of radioisotope transferred to the energy conversion layer per unit time is greater, resulting in excellent efficiency. Furthermore, according to the embodiment of the present invention, since the electrode is arranged outside the radioactive source, the electrode also has the function of shielding or blocking the radiation, and it is also safer in terms of radiation shielding or blocking.

In one example, as illustrated in FIG. 1, the electrode assembly 10 may be the jelly roll type electrode assembly wound in one direction around the central axis C, advantageously around the central member 150 having such a central axis C. The electrode assembly 10 may comprise elements stacked together, for example, including: the first electrode 111; the second electrode 112; the energy conversion layer 130 provided between the first electrode 111 and the second electrode 112; and the radioactive source 120 provided respectively in at least one of the space between the first electrode 111 and the energy conversion layer 130 and the space between the second electrode 112 and the energy conversion layer 130. The electrode assembly may include the insulating layer 160 on the surface of the first electrode 111 that does not face the radioactive source 120.

As explained, the electrode assembly 10 according to an example embodiment may include the first electrode 111 and the second electrode 112. The first electrode 111 and the second electrode 112 may include an anode that provides electrons and a cathode that receives electrons.

The second electrode 112 may be of an opposite type from the type of the first electrode 111. For example, when the first electrode 111 is an anode, the second electrode 112 may be a cathode, and when the first electrode 111 is a cathode, the second electrode 112 may be an anode.

In one example, the first electrode 111 and the second electrode 112 may be a current collector. The first electrode 111 and the second electrode 112 are not specifically limited in terms of type, size, and shape as long as they have electrical conductivity without causing physical or chemical changes to the radioisotope battery. For example, the first electrode 111 and the second electrode 112 may independently include metallic materials such as gold (Au), silver (Ag), platinum (Pt), stainless steel, copper (Cu), aluminum (Al), nickel (Ni), or titanium (Ti), include transparent oxides such as fluorine (F)-doped tin oxide (FTO), zinc oxide (ZnO), or indium tin oxide (ITO, In₂₋ₓSnₓO₃, 0<x<2), or include carbon-based compounds such as carbon-nanotubes, graphene, reduced graphene, and graphene oxide.

The first electrode 111 and the second electrode 112 may be configured identical to each other or, if required, different from each other.

The electrode assembly 10 according to an example embodiment may include the energy conversion layer 130 between the first electrode 111 and the second electrode 112.

In one example, the energy conversion layer 130 may form electron-hole pairs by the radiation emitted from the radioactive source 120. In one example, the energy conversion layer 130 may be an inorganic layer, an organic layer, a dye sensitized layer, or a combination thereof, and may generate electrical energy by forming electron-hole pairs using the radiation.

Examples of the inorganic layer may include an inorganic material that receives light and generates electrical energy. The inorganic material may include, for example, silicon, single crystal silicon, polycrystalline silicon, amorphous silicon, InGaSe, CuSe, InSe, InGaP, GaAs, a chalcopyrite compound, a perovskite compound, or a kesterite compound.

The InGaSe layer may include one of or mixture of In, In₄Se₃, InSe, In₂Se₃, GaSe, Ga2Se₃, and Se, the CuSe layer may include one of or mixture of Cu, Cu₂Se, CuSe₂, and Se, and the InSe layer may include one of or mixture of In, In₄Se₃, InSe, In₂Se₃, and Se.

The chalcopyrite compound may include at least one selected from, for example, CuAlS₂, CuAlSe₂, CuAlTe₂, CuGaS₂, CuGaSe₂, CuGaTe₂, CuInS₂, CuInSe₂, CuInTe₂, AgAlS₂, AgAlSe₂, AgAlTe₂, AgGaS₂, AgGaSe₂, AgGaTe₂, AgInS₂, AgInSe₂, AgInTe₂, and combinations thereof.

The perovskite compound may include at least one selected from, for example, SrTiO₃, CaTiO₃, and combinations thereof.

Examples of the kesterite compounds may include group I₂-II-IV-VI₄ kesterite compound, and specifically, at least one selected from Cu₂ZnSnS₄, Cu₂ZnSnSe₄, Cu₂ZnGeS₄, Cu₂ZnGeSe₄, Cu₂MnSnS₄, Cu₂MnSnSe₄, Cu₂MnGeS₄, Cu₂MnGeSe₄, Ag₂ZnSnS₄, Ag₂ZnSnSe₄, Ag₂ZnGeS₄, Ag₂ZnGeSe₄, Ag₂MnSnS₄, Ag₂MnSnSe₄, Ag₂MnGeS₄, Ag₂MnGeSe₄, and combinations thereof.

In one example, the energy conversion layer 130 may include organics used for an organic layer generating electrical energy by receiving light in a solar cell field. For example, the energy conversion layer 130 may include thiophene-based compounds. Meanwhile, the energy conversion layer 130 may be an organic-inorganic hybrid type formed by appropriately mixing the inorganic and organic materials described above.

Examples of the organic material may include a fullerene (C₆₀) compound, a phenanthroline derivative such as 2.9-dimethyl-4,7-diphenyl-1,10-phenanthroline (BCP), a phenylpyridine derivative such as 4,6-bis (3,5-di-4-pyridinyl phenyl)-2-methylpyrimidine (B4PymPm) or tris (2,4,6-trimethyl-3-(pyridin-3-yl) phenyl) borane (3TPYMB), a thiophene derivative such as poly (3-hexylthiophene-2,5-diyl) (P3HT), a phthalocyanine derivative, a porphyrin derivative, a triarylamine derivative, a carbazole derivative, or an oligothiophene derivative.

In addition, the organic-inorganic hybrid type may include an organic-inorganic perovskite compound, and examples of the organic-inorganic hybrid type may include a halidebased organic-inorganic perovskite compound. Specific examples of the organic-inorganic hybrid type may include at least one selected from CH₃NH₃PbI₃, CH₃NH₃PbBr₃, CH₃NH₃PbCl₃, CH₃NH₃SnI₃, CH₃NH₃SnBr₃, CH₃NH₃SnCl₃, CH₃NH₃PbI₍₃₋ₓ₎Clₓ, CH₃NH₃PbI₍₃₋ₓ₎Brₓ, CH₃NH₃PbBr₍₃₋ₓ₎Clₓ, CH₃NH₃Pb_{(1-y)}Sn_{y}I₃, CH₃NH₃Pb_{(1-y)}Sn_{y}Br₃, CH₃NH₃Pb_{(1-y)}Sn_{y}Cl₃, CH₃NH₃Pb_{(1-y)}Sn_{y}I₍₃₋ₓ₎Clₓ, CH₃NH₃Pb_{(1-y)}Sn_{y}I₍₃₋ₓ₎Brₓ and CH₃NH₃Pb_{(1-y)}Sn_{y}Br₍₃₋ₓ₎Clₓ (0≤x≤3, 0 ≤ y ≤ 1), and may include using CFH₂NH₃, CF₂HNH₃, CF₃NH₃, or NH₂CH=NH₂ instead of CH₃NH₃ in the compound.

Alternatively, in one example, the energy conversion layer 130 may include a scintillator that absorbs the radiation energy emitted from the radioactive source 120 and converts the radiation energy into light energy or electrical energy. In addition, at least one surface of the energy conversion layer 130 may include a thin film layer including a scintillator.

In one example, the scintillator may include, but is not limited to, an inorganic compound, such as NaI(Tl), CsI(Tl), GoS, CsI(Na), CsI(pure), CsF, KI(Tl), LiI(Eu), BGO, BaF₂, CaF₂(Eu), ZnS(Ag), CaWO₄, CdWO₄, YAG(Ce) (Y₃Al₅O₁₂(Ce)), GSO, LSO, GAGG:Ce, ZnO(Ga), LaCl₃(Ce), or LaBr₃(Ce); an organic compound, such as anthracene, stilbene, naphthalene, or polyethylene naphthalate; or a combination thereof.

In one example, the energy conversion layer 130 may include a first energy conversion layer 131 that includes a type-I semiconductor adjacent to the first electrode 111 and a second energy conversion layer 132 including a type-II semiconductor adjacent to the second electrode 112.

In one example, one of the type-I semiconductor and the type-II semiconductor may be a P-type semiconductor and the other may be an N-type semiconductor. That is, the type-I semiconductor and the type-II semiconductor may be different types. For example, when the type-I semiconductor is a P-type semiconductor, the type-II semiconductor may be an N-type semiconductor, and when the type-I semiconductor is an N-type semiconductor, the type-II semiconductor may be a P-type semiconductor.

In one example, a P-N junction layer (or intrinsic semiconductor layer) (not illustrated) formed at an interface where the P-type semiconductor and the N-type semiconductor come into contact with each other at an interface between the type-I semiconductor and the type-II semiconductor may be additionally included. The P-N junction layer may be included at the interface between the first energy conversion layer 131 and the second energy conversion layer 132. Electron-hole pairs may be formed in the P-N junction layer. In particular, as the surface area of the interface of the P-N junction layer increases, the amount of electron-hole pairs formed per unit time increases, so there is an effect of improving the efficiency of the radioisotope battery.

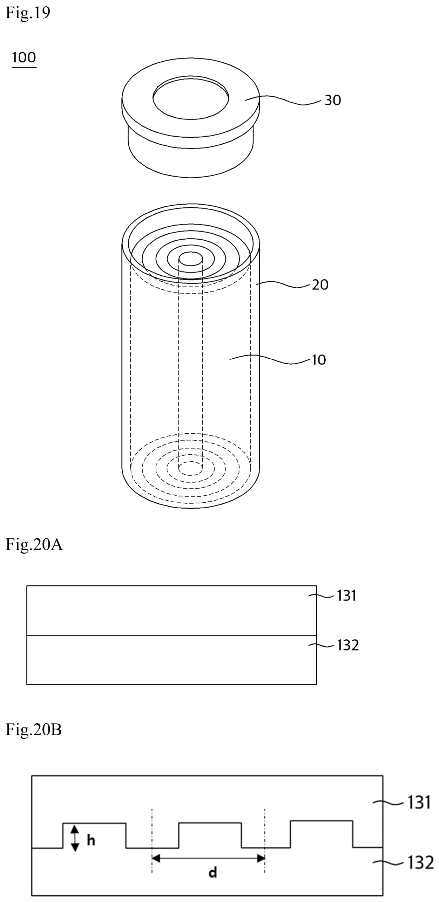

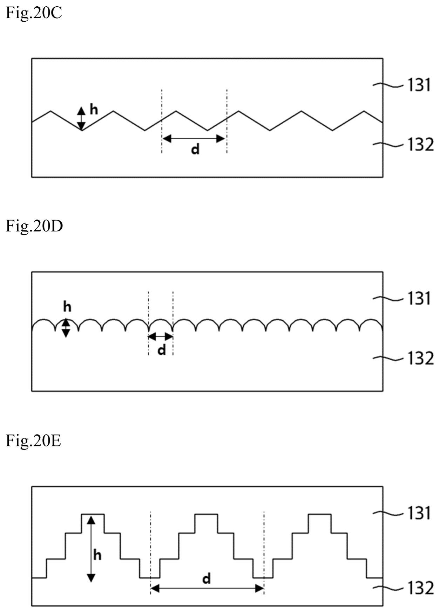

In the electrode assembly 10 according to an example embodiment, as shown in FIG. 20A, the surface area between the first energy conversion layer 131 and the second energy conversion layer 132 may be in the shape of a straight line. However, in order to increase the surface area where the first energy conversion layer 131 and the second energy conversion layer 132 come into contact with each other, an interface between the first energy conversion layer 131 and the second energy conversion layer 132 may have a shape such as a convex pentagon (FIG. 20B), a concave triangle (FIG. 20C), a wave shape (FIG. 20D), or a wheel-butt shape (FIG. 20E). However, these shapes are only examples and they are not particularly limited as long as they expand the surface area. In one example, the interface described above may be implemented by a method of forming a microstructure using a printing method using CLICHÉ or a lithography method.

In one example, even if the interface of the energy conversion layer is generally a straight line, unevenness may be involved to increase the surface area. Such unevenness may include a generally undulating profile having deviations in height away from the generally flat plane of the interface. When the interface between the first energy conversion layer 131 and the second energy conversion layer 132 may have an undulating profile defining a concave-convex shape, concave-triangular shape, wave shape, or wheel-butt-shaped unevenness, the distance between the low point and the high point of the unevenness of the interface in the stacking direction of the first energy conversion layer 131 and the second energy conversion layer 132 may be referred to as a height h, and the height h of the unevenness may be 1% to 90% of the thickness of the first energy conversion layer 131 and/or the second energy conversion layer 132, and specifically, may be 1% to 80%, 1% to 70%, 5% to 60%, or 10% to 50%, but is not limited thereto.

When the interface between the first energy conversion layer 131 and the second energy conversion layer 132 involves the above-described unevenness or undulations, a single component of the unevenness pattern may have a width d in the direction perpendicular to the height h, the width d possibly being 1/10⁶% to 30% of the width of the first energy conversion layer 131 and/or the second energy conversion layer 132. For example, the width d may be 1/10⁵% to 20%, 1/10³% to 20%, or 0.01% to 10%, but is not limited thereto.

In addition, assuming that the interface between the first energy conversion layer 131 and the second energy conversion layer 132 has a surface area A when it is a flat plane without involving unevenness and a surface area B when it involves unevenness, the ratio between the two surface areas (B/A X 100) may be 110% to 400%. Specifically, the ratio may be 110% to 300%, 120% to 300%, and preferably 120% to 250%. When the ratio between the surface area A and the surface area B satisfies the above range, the surface area B of the interface increases by that ratio compared to the surface area A, so the amount of electron-hole pairs formed when radiation reaches the interface increases, thereby improving the efficiency of the battery.

In this specification, examples of the P-type semiconductor may be silicon or diamond doped with boron (B), aluminum (Al), gallium (Ga), or indium (In) that are group 13 elements of the periodic table, or may be a compound semiconductor doped with boron (B), aluminum (Al), gallium (Ga), or indium (In) that are group 13 elements of the periodic table.

In this specification, examples of the N-type semiconductor may be silicon or diamond doped with nitrogen (N), phosphorus (P), arsenic (As), or antimony (Sb) that are group 15 elements of the periodic table, or may be a compound semiconductor doped with nitrogen (N), phosphorus (P), arsenic (As), or antimony (Sb) that are group 15 elements of the periodic table.

In this specification, a compound semiconductor refers to a semiconductor composed of two or more elements, and, for example, may include silicon carbide (SiC), silicon oxide (SiO₂ ), aluminum phosphide (AlP), aluminum arsenide (AlAs), gallium arsenide (GaAs), gallium nitride (GaN), or the like.

When the first energy conversion layer 131 and the second energy conversion layer 132 form a homogeneous bond, a metal oxide having the chemical formula of AMO₃ (wherein A is at least one selected from the group consisting of La, Ba, Sr, and K, and M is at least one selected from the group consisting of Al, In, Ga, Ti, Sn, Hf, Ta, and Zr) may be used as the first energy conversion layer 131 and the second energy conversion layer 132. Examples of the metal oxide may include at least one selected from the group consisting of BaSnO₃, BaHfO₃, BaZrO₃, BaHf₁₋ₓTiₓO₃(wherein, 0<x<1), Ba₁₋ₓLaₓSnO₃ (wherein, 0<x<1), Bi₄Ge₃O₁₂, Al₂O₃, Y₂O₃, La₂O₃, Ga₂O₃, Bi₂O₃, ZrO₂, HfO₂, Ta₂O₅, TiO₂, LaInO₃, LaGaO₃, SrZrO₃, SrHfO₃, SrTaO₇, LaIn₁₋ₓGaₓO₃ (wherein, 0<x<1), LaGaO₃, SrTiO₃, KTaO₃, HfSiO₄, Ta₃Ti₂Oₓ (wherein, 0<x<1), and LaAlO₃.

The electrode assembly 10 according to an example embodiment may include a radioactive source 120.

In one example, the term radioactive source 120 is a concept including a radiation source or a radioactive source, and the radioactive source may include a radioactive nuclide that emits radiation including at least one selected from, for example, gamma particles (gamma rays), alpha particles (alpha rays), beta particles (beta rays), and neutron radiation (neutron rays).

The radioactive source 120 may include a radio-isotope. In one example, the radioactive source 120 may include a radio-isotope that emits alpha particles (alpha rays), a radioisotope that emits beta particles (beta rays), or a combination of the two.

In one example, the radioactive source 120 may include a radio-isotope that emits alpha particles (alpha rays), and examples of the radioactive source 120 may include at least one selected from the group consisting of americium-241 (²⁴¹Am), americium-243 (²⁴³Am), polonium-209 (²⁰⁹Po), polonium-210 (²¹⁰Po), plutonium-238 (²³⁸Pu), plutonium-239 (²³⁹Pu), curium-242 (²⁴²Cm), curium-244 (²⁴⁴Cm), curium-249 (²⁴⁹Cm), promethium-147 (¹⁴⁷Pm), uranium-238 (²³⁸U), thorium-232 (²³²Th), radium-226 (²²⁶Ra), bismuth-210 (²¹⁰Bi), neptunium-237 (²³⁷Np), europium-152 (¹⁵²Eu), francium-223 (²²³Fr), astatine-210 (²¹⁰At), protactinium-231 (²³¹Pa), einsteinium-253 (²⁵³Es), californium-252 (²⁵²⁰Cf), and berkelium-249 (²⁴⁹Bk), but is not limited.

In one example, the radioactive source 120 may include a radio-isotope that emits beta particles (beta rays), and examples of the radioactive source 120 may include at least one selected from the group consisting of tritium (³H), calcium-45 (⁴⁵Ca), nickel (⁶³Ni), copper (⁶¹Cu), strontium (strontium)-90 (⁹⁰Sr), promethium (promethium)-147 (¹⁴⁷Pm), osmium (osmium)-194 (¹⁹⁴OS), thulium (thulium)-171 (¹⁷¹Tm), tantalum (tantalum)-179 (¹⁷⁹Ta), cadmium (cadmium)-109 (¹⁰⁹Cd), germanium (germanium)-68 (⁶⁸Ge), cerium-159 (¹⁵⁹Ce), and tungsten-181 (¹⁸¹W), but is not limited thereto.

The electrode assembly 10 according to an example embodiment may preferably include grooves 113 and 114 provided at least one of the first electrode 111 and the second electrode 112, particularly on a surface thereof facing the energy conversion layer 130, and the radioactive source 120 may be provided in the grooves 113 and 114.

The method of forming a groove in the first electrode and the second electrode may include, for example, a wet etching method, a dry etching method, a roll-to-roll method, or a photoresist method, but is not limited thereto.

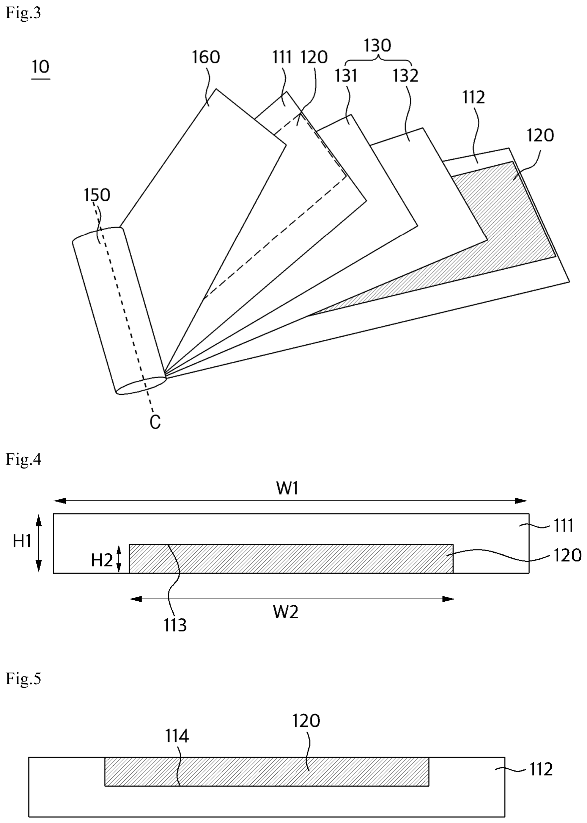

FIG. 4 is a diagram illustrating a cross-section of the first electrode 111 according to an example embodiment, and FIG. 5 is a diagram illustrating a cross-section of the second electrode 112 according to an example embodiment.

As illustrated in FIG. 4, the first electrode 111 may include a groove 113 on the surface facing the energy conversion layer 130, and the radioactive source 120 may be provided in the groove 113. Hence, in the embodiment in FIG. 4, the space between the first electrode 111 and the energy conversion layer 130 in which the radioactive source 120 is provided is actually the groove 113 in the first electrode 111.

Alternatively to FIG. 4 or in addition to FIG. 4, as illustrated in FIG. 5, the second electrode 112 may include a groove 114 on the surface facing the energy conversion layer 130, and the radioactive source 120 may be provided in the groove 114. Hence, in the embodiment in FIG. 5, the space between the second electrode 112 and the energy conversion layer 130 in which the radioactive source 120 is provided is actually the groove 114 in the second electrode 112.

In FIG. 4 and FIG. 5, the shape of the grooves 113 and 114 is not limited to any specific shape as long as they may arrange (or embed) the radioactive source 120 in one surface of the first electrode 111 and the second electrode 112. The groove 113 of the first electrode 111 and the groove 114 of the second electrode 112 may have the same shape or may be different from each other in shape.

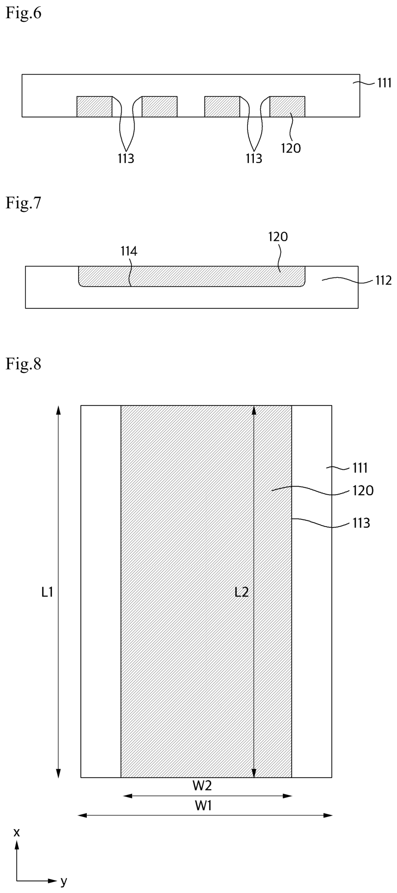

As illustrated in FIG. 6, the groove 113 in the first electrode 111 may be provided by forming a plurality of grooves spaced apart from each other on one surface (surface facing the energy conversion layer 130) of the first electrode 111. As shown, the grooves 113 are spaced apart such that at least a portion of the inner surface of the electrode 111 free of grooves is defined between adjacent grooves 113. As illustrated in FIG. 7, the groove 114 in the second electrode 112 may include chamfered edges, i.e., a rounded shape of an edge portion collapsing into the inside of the second electrode 112 when formed on one surface (surface facing the energy conversion layer 130) of the second electrode 112. Alternatively, the groove 114 in the second electrode 112 may be formed with a plurality of grooves 114, and the first electrode 111 may be formed to include the chamfered or rounded shape groove. It is also possible that both electrodes 111 and 112 are each formed with a plurality of grooves and or both electrodes 111 and 112 are each formed with the chamfered or rounded shape edge single groove.

FIGS. 8 to 12 may refer to a cross-section of the first electrode 111 according to an example embodiment, as viewed from the energy conversion layer 130.

As illustrated in FIG. 8, in an example embodiment, the groove 113 may be formed in one surface of the first electrode 111 and the radioactive source 120 may be arranged inside the groove 113.

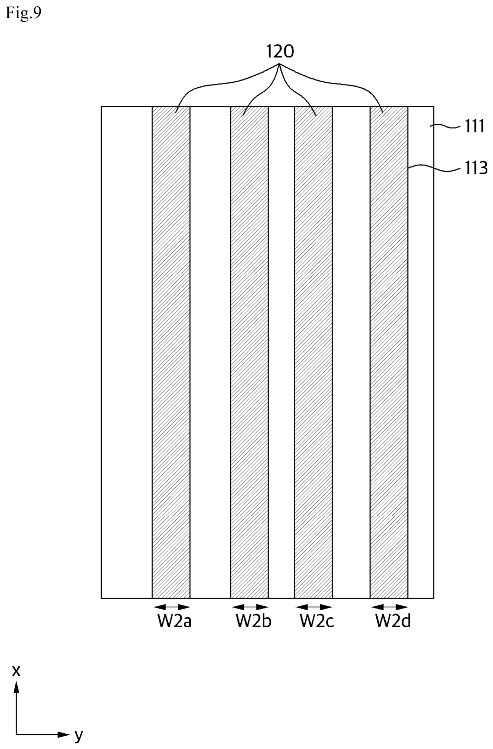

As illustrated in FIG. 9, in an example embodiment, the plurality of grooves 113 may be formed in one surface of the first electrode 111 to extend in one direction (e.g., the x direction), to be parallel to each other, spaced apart in a direction orthogonal to the extension direction (e.g., the y direction). The radioactive source 120 may be arranged inside the plurality of groove 113. Alternatively, although not illustrated in the drawing, the plurality of grooves 113 may be formed in one surface of the first electrode 111 to extend in the y direction, to be parallel to each other, spaced apart in the direction orthogonal to the extension direction, i.e., the x direction.

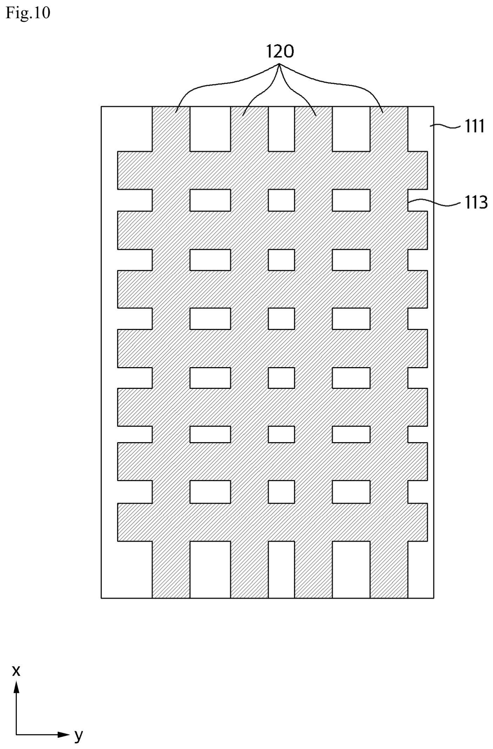

As illustrated in FIG. 10, in an example embodiment, a grid-shaped or mesh-shaped groove 113 may be formed in one surface of the first electrode 111, and the radioactive source 120 may be arranged inside the groove 113.

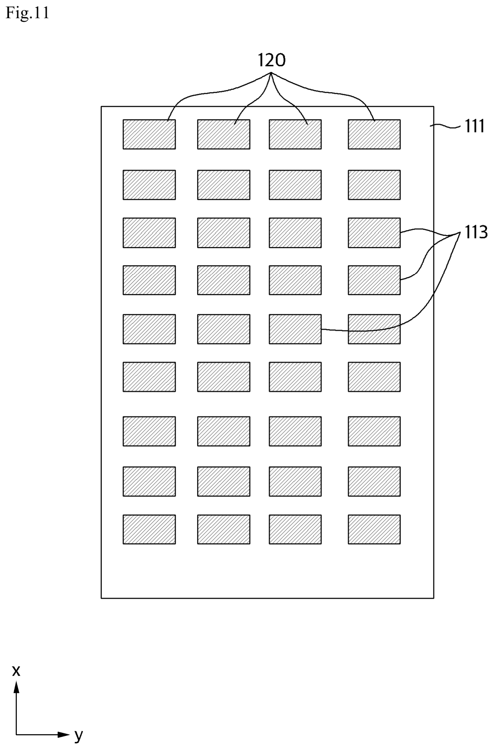

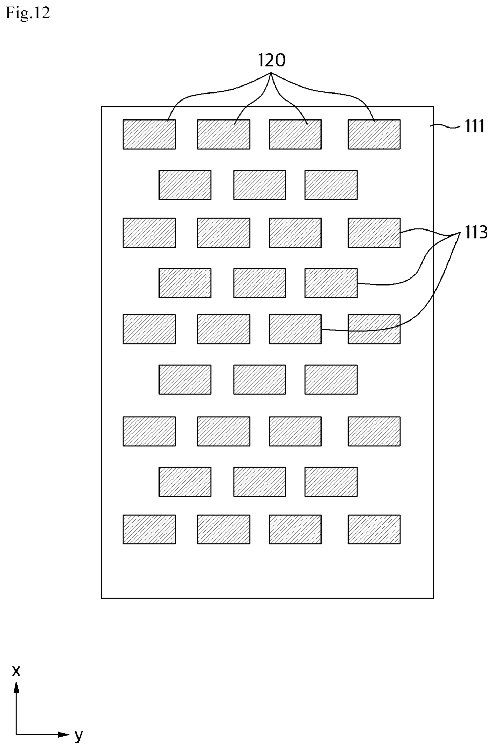

As illustrated in FIG. 11, in an example embodiment, the plurality of grooves 113 may be formed in regular rows and columns spaced apart from each other in the x direction and the y direction in one surface of the first electrode 111. Moreover, as illustrated in FIG. 12, in an example embodiment, the plurality of grooves 113 may be formed in one surface of the first electrode 111, such that a first row of grooves 113 and a neighboring second row of grooves 113 are arranged in a staggering manner, thereby respective grooves 113 constituting the first and second rows not forming parallel columns in one of the x direction or the y direction.

Referring to FIG. 4, the electrode 111 may have a width W1 in one direction, for example in the y direction as also shown in FIG. 8, and the groove 113 may have a width W2 in this direction. Furthermore, the electrode 111 may have a thickness (also denoted as "height" of the electrode hereinafter) H1 in the thickness direction. A depth (hereinafter also denoted as "height" of the groove) H2 of the grooves 113 and 114 from the surface of the respective groove may be 1% to 95% of a height H1 of the first electrode 111, and specifically, 1% to 90%, 1% to 85%, 1% to 80%, 1% to 70%, 2% to 60%, or 5% to 50% of the height H1, but is not limited thereto. A width W2 of the grooves 113 and 114 may be 5% to 100% of a width W1 of the first electrode 111, and specifically, 10% to 100%, 15% to 95%, 20% to 90%, 30% to 90%, 40% to 90%, or 50% to 90% of the width W1, but is not limited thereto.

Referring to FIG. 8, a length L2 of the grooves 113 and 114 in the length direction, for example, in the x direction perpendicular to both the width y direction and the thickness (height) direction, may be 5% to 100% of a length L1 of the first electrode 111 in the length direction, and specifically, 10% to 100%, 15% to 95%, 20% to 90%, 30% to 90%, 40% to 90%, or 50% to 90% of the length L1, but is not limited thereto.

The width W2 and length L2 of the grooves 113 and 114 may mean the sum of widths W2a, W2b, W2c, and W2d of the individual grooves or the sum of lengths of the individual grooves, respectively, when a plurality of grooves are formed as in FIG. 9.

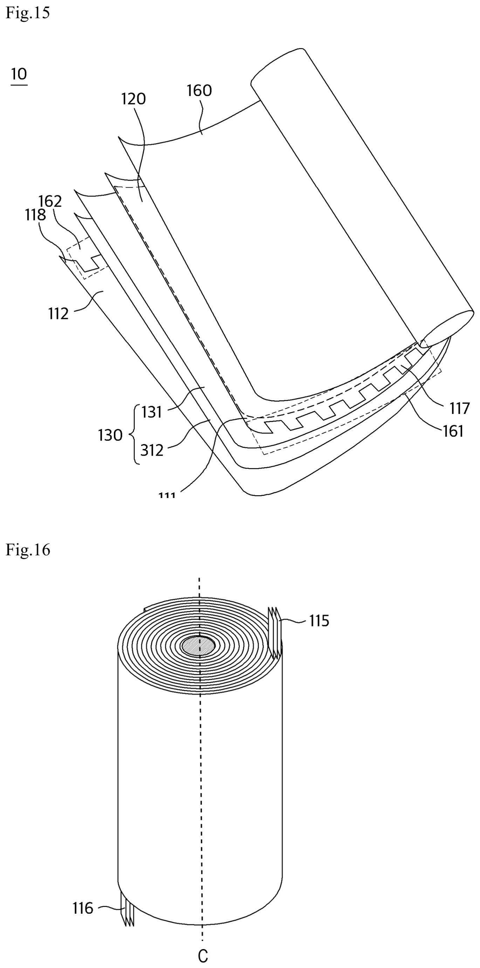

In an example embodiment, the width W2 of the grooves 113 and 114 may be smaller than the width W1 of the first electrode 111 and the second electrode 112. In case the y-direction terminal portions of the first electrode 111 and the second electrode 112 are not formed with grooves 113 and 114, radiation from the radioactive source 120 arranged in the grooves may be prevented from being emitted outside the jellyroll-shaped electrode assembly in the top and bottom direction thereof. It is preferable that portions of the first electrode 111 and the second electrode 112 in which terminal portions of the first electrode 111 or second electrode 112 are formed in the y-direction, do not include any of the grooves 113 and 114. This ensures, since the radioactive source 120 is arranged in the grooves, the radiation from the radioactive source 120 to be directed in the direction of the central winding axis C (see e.g. in FIG. 16), not being emitted to the outside from the top and bottom portions of the jelly roll type electrode assembly 10.

FIGS. 8 to 12 illustrate the first electrode 111 as an example, but the same may be applied to the second electrode 112.

In the electrode assembly 10 according to an example embodiment, the radiation (e.g., alpha rays or beta rays) generated from the radioactive source 120 should be incident on the energy conversion layer 130 over as a wide range as possible in order for the energy conversion layer 130 to advantageously produce high electric output power.

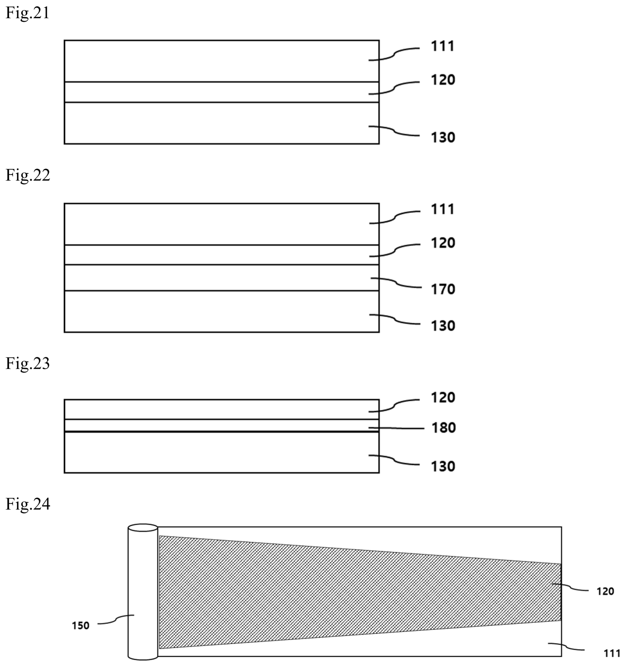

FIG. 21 is a diagram illustrating a cross-section of the first electrode 111, the radioactive source 120, and the energy conversion layer 130 according to one embodiment.

As illustrated in FIG. 21, the first electrode 111 may have the radioactive source 120 on the surface facing the energy conversion layer 130.

Although not illustrated in the drawing, the second electrode 112 may have the radioactive source 120 on the surface facing the energy conversion layer 130.

In addition, the electrode assembly 10 according to one embodiment may be provided with the radioactive source 120 on the energy conversion layer 130. In this case, forming the radioactive source 120 on the energy conversion layer 130 including the N-type semiconductor may increase the interface between the radiation source 120 and the energy conversion layer 130, which is advantageous in terms of efficiency.

The surface area of an interface between the radioactive source 120 and the energy conversion layer 130 (*e.g.,* the side of the energy conversion layer 130 including the N-type semiconductor) may be increased by any of the techniques to produce unevenness so as to result in any of the interface profiles discussed above in connection with the interface between the first energy conversion layer 131 and the second energy conversion layer 132. For example, any one of the generally undulating profiles discussed in connection with FIGS. 20A-E may be provided at the interface between the radioactive source 120 and the energy conversion layer 130.

In the electrode assembly 10 according to one embodiment, the method of forming the radioactive source 120 may include, but is not limited to, electroplating, electroless plating, or chemical vapor deposition (CVD). Among them, when considering radiation shielding and safety of workers, the electroplating method, which is relatively simple in process and easy to control the reaction, may be used.

In one example, a plating solution for the electroplating may be prepared, and when Ni-63 is used as the radioactive source 120, for example, Ni-62 may be irradiated with neutrons to produce Ni-63, and then chlorinated to produce ⁶³NiCl₂, thereby producing a Ni-63 electrolyte. Alternatively, Ni-62 may be chlorinated first to produce ⁶²NiCl₂, and then irradiated with neutrons to produce ⁶³NiCl₂, but this is only an example and is not limited thereto.

In one example, the plating solution may further include additives such as a pH regulator or a pH stabilizer, and in this case, there is an advantage in that the speed or growth rate of plating is controlled, thereby making the formation of the radioactive source 120 uniform or easy.

In one example, when forming the radioactive source 120, as illustrated in FIG. 23, the energy conversion layer 130 may additionally include a seed layer or a catalyst particle layer 180. The seed layer or catalyst particle layer 180 is formed in advance to allow the energy conversion layer 130 to be filled with the radioactive source 120, and may be configured to include, for example, a metal such as Ni, Pd, Pt, or Au. In this case, the seed layer or catalyst particle layer 180 may be formed by a deposition or plating method, but is not limited thereto.

In one example, when the radioactive source is formed in the first electrode or the second electrode, or the energy conversion layer, the concentration (or content) of the radioisotope in any region close to the central member may be higher than the concentration (or content) of the radioisotope in any region farther from the central member. For example, the radioisotope concentration (or content) of the radioactive source may be formed to have a gradient, such that the concentration (or content) decreases as it gets farther away from the central member. In this case, since the radioactive source is concentrated toward the center member, the radiation shielding effect may be improved after the electrode assembly is wound.

In one example, as illustrated in FIG. 24, when the radioactive source 120 is formed on the first electrode 111 or the second electrode 112, or the energy conversion layer 130, the area where the radioactive source 120 is to be provided may be formed to decrease in size as it gets farther away from the center member 150, insofar as the thickness remains the same. In this case, insofar as the content of the radioactive source 120 decreases as it gets farther away from the center member 150, any shape may be adopted without limitation. Moreover, any such a shape gradually decreasing the content of the radioactive source 120 may be combined with the above-described unevenness of the interface for increasing the surface area.

In one example, a third electrode 170 may be further provided between the energy conversion layer 130 and the radioactive source 120.

FIG. 22 is a diagram illustrating a cross-section of the first electrode 111, the radioactive source 120, the third electrode 170, and the energy conversion layer 130 according to one embodiment.

As illustrated in FIG. 22, the third electrode 170 may be provided between the energy conversion layer 130 and the radioactive source 120.

The third electrode 170 may be equally utilized in conjunction with the first electrode 111 and the second electrode 112 described above. In this case, when the first electrode 111 is equipped with the radioactive source 120 and the third electrode 170 is provided between the radioactive source 120 and the energy conversion layer 130, the third electrode 170 may include the same material as the first electrode 111. Alternatively, when the second electrode 112 is equipped with the radioactive source 120 and a third electrode 170 is provided between the radioactive source 120 and the energy conversion layer 130, the third electrode 170 may include the same material as the second electrode 112.

However, the third electrode 170 does not necessarily have to be the same material as the first electrode 111 and the second electrode 112, and may include different materials.

The third electrode 170 may have a thickness of 90% or less of the thickness of the first electrode 111 or the second electrode 112. In addition, the third electrode 170 may have a very thin film shape. For example, the thickness of the third electrode 170 may be 1% to 90%, 5% to 80%, 10% to 70%, 15% to 60%, or 20% to 50% of the thickness of the first electrode 111 or the second electrode 112. Since the third electrode 170 is thinner than the first electrode 111 and the second electrode 112, it may efficiently allow radiation emitted from the radioactive source 120 to reach the energy conversion layer 130.

In the case where the third electrode 170 is provided between the radioactive source 120 and the energy conversion layer 130, the first electrode 111 (or the second electrode 112) and the third electrode 170 are arranged at both sides of the radioactive source 120, and the third electrode 170 may serve as a radiation shield. Furthermore, when the electrode assembly is wound, the shielding function of the third electrode 170 may be further maximized.

In the electrode assembly 10 according to an example embodiment, the radiation (e.g., alpha rays or beta rays) generated from the radioactive source 120 may be incident on the energy conversion layer 130 over a wide range as much as possible, which may be advantageous for high output.

In one example, the energy conversion layer 130 may be in contact with the radioactive source 120 and may form an interface. Specifically, the radioactive source 120 may be in direct contact with the type-I semiconductor or the type-II semiconductor of the energy conversion layer 130, or may form the interface.

In one example, since the efficiency of the radioisotope battery may increase when the surface area of the interface between the energy conversion layer including the N-type semiconductor and the radioactive source 120 increases, it is important to improve the interface characteristics between the radioactive source 120 and the energy conversion layer including the N-type semiconductor.

In one example, the first electrode 111 may be in contact with at least a portion of the first energy conversion layer 131. In an example embodiment, the second electrode 112 may be in contact with at least a portion of the second energy conversion layer 132.

As explained above, electron-hole pairs are formed in the energy conversion layer 130 from radiation emitted from the radioactive source 120, and a current is generated from the electron-hole pairs to produce electrical energy. In this case, a portion of the first electrode 111 and a portion of the second electrode 112, respectively must be electrically connected to a portion of the energy conversion layer 130 in order to accommodate the electron-hole pairs generated in the energy conversion layer 130.

However, when the first electrode 111 and the second electrode 112 are in direct contact with each other, a problematic short circuit will occur. Since, in the electrode assembly 10, the energy conversion layer 130 is arranged between the first electrode 111 and the second electrode 112, the energy conversion layer 130 serves to physically and/or electrically separate the first electrode 111 and the second electrode 112 to prevent such a problem.

In one example, the energy conversion layer 130 may have a surface area equal to or larger than that of the first electrode 111 and the second electrode 112, and when the first electrode 111, the second electrode 112, and the energy conversion layer 130 are stacked, the energy conversion layer 130 may be arranged in between the surfaces of the first electrode 111 and the second electrode 112 facing each other.

As illustrated in FIG. 1 (and also shown in FIG. 3, FIGS. 13-15 described below), the electrode assembly 10 according to an example embodiment may further include an insulating layer 160 on a side of the first electrode 111 (and/or, although not illustrated, a side of the second electrode 112) not facing the radioactive source 120.

In one example, by including the insulating layer 160 on the side of the first electrode 112 (and/or a side of the second electrode 112) not facing the radioactive source 120, it is possible to prevent the phenomenon in which the first electrode 111 comes into contact with the second electrode 112 when wound in a jelly roll type, thereby preventing an electrical problem such as the short circuit.

The insulating layer 160 may be included on the side of the first electrode 111, the side of the second electrode 112, or the both sides of the first electrode 111 and the second electrode 112, but may be, for example, on the side of the first electrode 111 in order to prevent the central member 150, if provided, and the first electrode 111 from directly contacting each other, but is not limited thereto.

In one example, the insulation layer 160 is not specifically limited as long as it is made of a material with an electrical insulation property, but may include one or more selected from a group of, for example, a silicate (e.g., TEOS), silicon nitride (SiN), hafnium oxide, hafnium silicon oxide, hafnium aluminum oxide, lanthanum oxide, lanthanum aluminum oxide, zirconium oxide, zirconium silicon oxide, tantalum oxide, titanium oxide, barium strontium titanium oxide, barium titanium oxide, strontium titanium oxide, yttrium oxide, and aluminum oxide.

In one example, the insulating layer 160 may include a dielectric, and may further include a dielectric layer including a dielectric. The dielectric is not particularly limited as long as it is used in the art. The dielectric layer may optimize the arrangement of the radioactive source 120 and minimize the occurrence of leakage current, thereby further improving electrical stability.

In one example, the dielectric included in the insulating layer 160 may include a low-k dielectric having a dielectric constant of less than 3.9. The low-k dielectric is not specifically limited as long as it is used in the field, but may include one or more from the group consisting of Fluorinated TetraEthylOrthoSilicate (FTEOS), Hydrogen SilsesQuioxane (HSQ), Bis-benzoCycloButene (BCB), TetraMethylOrthoSilicate (TMOS), OctaMethyleyCloTetraSiloxane (OMCTS), HexaMethylDiSiloxane (HMDS), TriMethylSilyl Borate (TMSB), DiAcetoxyDitertiaryButoSiloxane (DADBS), TriMethylSilil Phosphate (TMSP), PolyTetraFluoroEthylene (PTFE), Tonen SilaZen (TOSZ), Fluoride Silicate Glass (FSG), polyimide nanofoams such as polypropylene oxide, Carbon Doped silicon Oxide (CDO), Organo Silicate Glass (OSG), SiLK^{™} (Dow Chemical), Amorphous Fluorinated Carbon, silica aerogels, silica xerogels, and mesoporous silica. When the dielectric disposed on the insulating layer 160 includes a low-k dielectric, the generation of leakage current may be minimized while, for example, the radiation generated from the radioactive source 120 may be efficiently transmitted to the energy conversion layer 130.

In one example, the dielectric included in the insulating layer 160 may include a high dielectric constant of 3.9 or greater. The high-k dielectric is not particularly limited as long as it is used in the art, but examples of the high-k dielectric may include one or more from the group consisting of boron nitride, hafnium oxide, hafnium silicon oxide, hafnium aluminum oxide, lanthanum oxide, lanthanum aluminum oxide, zirconium oxide, zirconium silicon oxide, tantalum oxide, titanium oxide, barium strontium titanium oxide, barium titanium oxide, strontium titanium oxide, yttrium oxide, aluminum oxide, lead scandium tantalum oxide, and lead zinc niobate, but is not limited thereto. When the dielectric disposed on the insulating layer 160 includes the high-k dielectric, the radioisotope battery may be designed to have a high degree of integration while minimizing the occurrence of leakage current.

FIG. 2 is a perspective view illustrating the electrode assembly 10 according to an example embodiment. In this example in FIG. 2, the electrode assembly 10 may be the jelly roll type electrode assembly. The electrode assembly 10 includes: the first electrode 111; the second electrode 112; the energy conversion layer 130 provided in between the first electrode 111 and the second electrode 112; the radioactive source 120 provided in the space between the second electrode 112 and the energy conversion layer 130. The stacked components are wound around in one direction (e.g., around the central member 150), to thereby form the jelly roll. Optionally, the stack may further include the insulating layer 160 on the side of the first electrode 111 not facing the radioactive source 120. As shown in FIG. 2, the insulating layer 160, the first electrodes 111, the energy conversion layer 130, the radioactive source 120, and the second electrode 112 may advantageously be wound stacked in this sequence around a central member 150 having the central axis.

FIG. 3 is a perspective view illustrating an electrode assembly 10 according to an example embodiment. In this example, as illustrated in FIG. 3, the electrode assembly 10 is a jelly roll type electrode assembly wound in one direction around the central axis C. The jelly roll type electrode assembly comprises: the first electrode 111, the second electrode 112, the energy conversion layer 130 provided between the first electrode 111 and the second electrode 112, and the radioactive source 120 provided in at least one of the space between the first electrode 111 and the energy conversion layer 130, as well as the space between the second electrode 112 and the energy conversion layer 130. Optionally, the stack may further include the insulating layer 160 on a side of the first electrode 111 (and/or a side of the second electrode 112) not facing the radioactive source 120. As shown in FIG. 1, FIG. 2 and FIG. 3, the insulating layer 160, the first electrodes 111, the energy conversion layer 130, the radioactive source 120, and the second electrode 112 may advantageously be wound stacked in this sequence around a central member 150 having the central axis C.

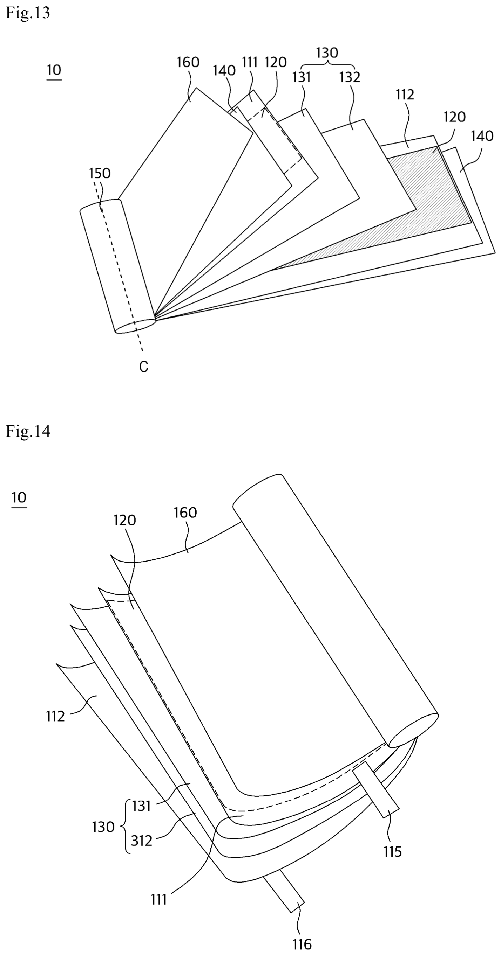

FIG. 13 is a perspective view illustrating an electrode assembly 10 according to an example embodiment.

In this example, the electrode assembly 10 may further include a protective layer 140 on a side of the first electrode 111 or the second electrode 112 not facing the radioactive source 120. An insulating layer 160 may be provided on the side of the protective layer 140 not facing the first electrode 111 or the second electrode 112 such that the protective layer 140 is, for example, as shown in FIG. 13, provided between the insulating layer 160 and the first electrode 111.

In this example, the protective layer 140 serves to reflect the radiation (e.g., alpha rays or beta rays) emitted from the radioactive source 120 so that it may be focused on the energy conversion layer 130, and is not limited to any material known in the art that may reflect the radiation. In one example, the protective layer 140 may include a material known to have radiation shielding or reflecting properties, such as copper, silver, or aluminum metal, or may include a material known to have radiation shielding or reflecting properties, such as a polymer such as polyethylene, polypropylene, ethylene propylene copolymer, ethylene methacrylate copolymer, or polyethylene terephthalate, but not limited thereto.

FIG. 14 is a perspective view illustrating an electrode assembly 10 according to an example embodiment.

In the example in FIG. 14, the first electrode 111 and the second electrode 112 included in the electrode assembly 10 may further include a first electrode tab 115 and a second electrode tab 116 (see also FIG. 16) on at least a portion of the surface opposite to the surface facing the energy conversion layer 130, respectively. That is, as shown in FIG. 14, here the radioactive source 120 is provided in the space between the first electrode 111 and the energy conversion layer 130 and the first electrode tab 115 is provided on a surface side of the first electrode 111 not including or facing the radioactive source 120. Likewise, the second electrode tab 116 is provided on a side of the second electrode 112 not facing the energy conversion layer 130. As also shown FIG. 14, the tabs 115, 116 are extended from a respective edge of the first electrode 111 and the second electrode 112 in the direction of the central axis C (see also FIG. 16). In FIG. 14, both electrode tabs 115, 116 are extended in the same direction whilst in FIG. 16 described below, they are extended in opposite directions of the central axis C.

According to another example, a plurality of first electrode tabs 115 may be provided along an edge of the first electrode 111 at predetermined intervals and a plurality of second electrode tabs 116 may be provided along an edge of the second electrode 112 at predetermined intervals in the length direction. As can be understood from FIG. 14, FIG. 16 and FIG. 8, the edges extend in the length direction, that is the x direction, and the tabs 115, 116 extend in the y direction. The first electrode tabs 115 and the second electrode tabs 116 may extend in the same direction, i.e. both in the +x direction or both in the -x direction, as shown in FIG. 14, or may extend in opposite directions, as shown in FIG. 16. The predetermined intervals, that is the spacing between the plurality of first electrode tabs 115 and the spacing between the plurality of second electrode tabs 116, respectively, are preferably selected such that when the electrode assembly 10 is wound into the jelly roll shape, as shown in FIG. 16, the first electrode tabs 115 overlap each other, and the second electrode tabs 116 overlap each other. In order to achieve a complete overlap, the spacings will preferably be selected to be variable to account for the thickness increase due to the winding of the electrode assembly 10. FIG. 16 illustrates that the tabs 115, 116 extend in opposite directions. However, the placement and spacings of the tabs 115, 116 may also be selected such that the overlapped first electrode tabs 115 are diagonally opposite to the overlapped second electrode tabs 116 with respect to the central axis C of the wound electrode assembly 10.

FIG. 15 is a perspective view illustrating an example of the electrode assembly 10 according to an example embodiment.

As will be understood from FIG. 1, FIG. 2, FIG. 3 and also from FIG. 4 and in particular FIG. 8, the radioactive source 120 is not provided to cover the entire surface of the first electrode layer 111, that is the width W2 of the radioactive source 120 is smaller than the entire width W1 of the first electrode 111. The radioactive source 120 with the smaller width W2 may be provided as a separate layer or may also be coated on the surface of the first electrode 111 (or second electrode 112, see FIG. 3) or be coated in the groove(s) 113 (or 114) of the first electrode 111 (or the second electrode 112). Due to the smaller width W2, in one example, in the electrode assembly 10, the first electrode 111 includes a first uncoated part 161 (with a width W1-W2, also visible in FIG. 8) along the edge of the first electrode 111 that is exposed to the outside of the energy conversion layer 130. This first uncoated part 161 includes a plurality of alternating first recesses creating a plurality of first joint parts 117 which are bendable. Likewise, the second electrode 112 includes a second uncoated part 162 that is exposed to the outside of the energy conversion layer 130 and also the second uncoated part 162 includes a plurality of alternating second recesses creating a plurality of second joint parts 118 which are bendable. The first uncoated part 161 and the second uncoated part 162 may be opposed to each other extending in the width direction of the first and second electrodes 111, 112, i.e. parallel to the central winding axis C shown in FIG. 16, or parallel to the width direction of the central member 150, if one is provided in the electrode assembly. In one not limiting example, the plurality of first recesses and first joint parts 117 and the plurality of second recesses and second joint parts 118 may be arranged such that the first recesses oppose at least partially the second joint parts 118, the first joint parts 117 oppose at least partially the second recesses, the second recesses oppose at least partially the first joint parts 117, and the second joint parts 118 oppose at least partially the first recesses. In one example, in the electrode assembly 10, the first electrode 111 includes a first uncoated part 161 that is exposed beyond the energy conversion layer 130 in the axial direction, and the first uncoated part 161 includes a plurality of first joint parts 117 in the form of tabs integrally formed with the current collector of the first electrode 111 and spaced apart from one another in a circumferential direction along an axial edge of the first electrode 111. Similarly, the second electrode 112 includes a second uncoated part 162 that is exposed beyond the energy conversion layer 130 in the axial direction at the opposite axial end of the electrode assembly 10 from the first uncoated part 161, and the second uncoated part 162 includes a plurality of second joint parts 118 also in the form of tabs integrally formed with the current collector of the second electrode 112 and spaced apart from one another in a circumferential direction along the edge of the second electrode 112 at the axially opposite end of the electrode assembly from first joint parts 117.

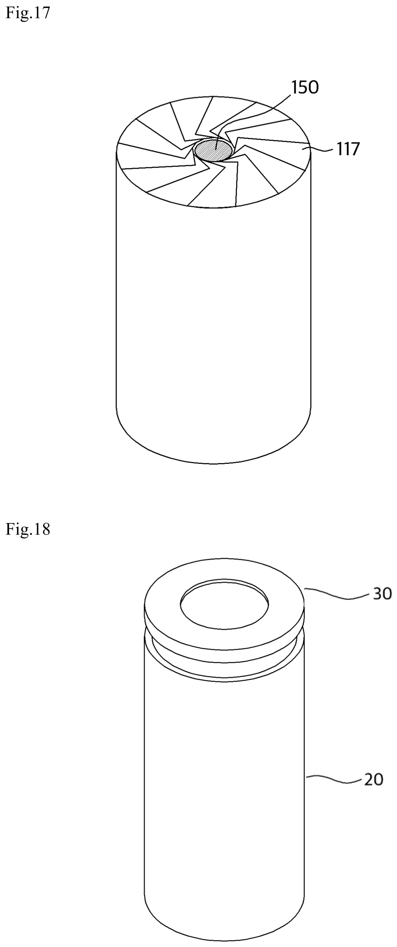

In one example, as illustrated in FIG. 17, the first joint parts 117 and the second joint parts 118 may be bent toward the central axis C, and towards the center member 150, respectively, if such a center member 150 is provided. When the central member 150 is provided, the side surface of the central member 150 perpendicular to the central axis C may be covered with the first and second joint parts 117, 118 such that an excellent sealing of the edges of the electrodes and the other layers of the wound electrode assembly 10 can be achieved.

The electrode assembly 10 according to an example embodiment may have a structure in which each electrode tab is separately provided on the first electrode 111 and the second electrode 112, or may have a tabless structure in which the first uncoated part 161 and the second uncoated part 162 of the first electrode 111 and the second electrode 112 include a first joint part 117 and a second bendable joint part 118, each function as an electrode tab, thereby not requiring a separate electrode tab.

The shapes of the first joint parts 117 and the second joint parts 118 may be a square shape as illustrated, but is not limited thereto. For example, the first joint parts 117 and the second joint parts 118 or respectively the first and second recesses forming them may have various shapes such as a square, a trapezoid, a triangle, a parallelogram, a semicircle, and a semi-ellipse.

The electrode assembly 10 according to an example embodiment may include the central member 150, and the central member 150 may serve to secure an optimized curvature in a jelly roll structure when winding the insulating layer 160, the first electrode 111, the radioactive source 120, the energy conversion layer 130, and the second electrode 112 that are included in the electrode assembly 10. However, the central member 150 may be omitted and the jelly roll type electrode assembly 10 may be obtained by simply winding the electrodes 111, 112, the energy conversion layer 130, the radioactive source 120, and possible other layers as explained in the embodiments above, around the central axis C which is indicated in FIG. 17 and FIG. 1, FIG. 2, FIG. 3.

Therefore, in one example, the electrode assembly 10 may be a jelly roll type electrode assembly that is wound around a central member 150 in one direction. In another example, the electrode assembly 10 may be a jelly roll type electrode assembly that is wound around the central axis C in one direction.

In one example, the central member 150 may include a dielectric, and the dielectric is not particularly limited as long as it is used in the art. When the central member 150 includes a dielectric, the electrical stability may be further improved by minimizing the occurrence of leakage current.

In one example, the dielectric included in the central member 150 may include a low-k dielectric having a dielectric constant of less than 3.9. The low-k dielectric is not specifically limited as long as it is used in the field, but may include one or more from a group of Fluorinated TetraEthylOrthoSilicate (FTEOS), Hydrogen SilsesQuioxane (HSQ), Bis-benzoCycloButene (BCB), TetraMethylOrthoSilicate (TMOS), OctaMethyleyCloTetraSiloxane (OMCTS), HexaMethylDiSiloxane (HMDS), TriMethylSilyl Borate (TMSB), DiAcetoxyDitertiaryButoSiloxane (DADBS), TriMethylSilil Phosphate (TMSP), PolyTetraFluoroEthylene (PTFE), Tonen SilaZen (TOSZ), Fluoride Silicate Glass (FSG), polyimide nanofoams such as polypropylene oxide, Carbon Doped silicon Oxide (CDO), Organo Silicate Glass (OSG), SiLK^{™} (Dow Chemical), Amorphous Fluorinated Carbon, silica aerogels, silica xerogels, and mesoporous silica. When the dielectric included in the central member 150 includes a low-k dielectric, the generation of leakage current may be minimized while, for example, the radiation generated from the radioactive source 120 may be efficiently transmitted to the energy conversion layer 130.

In one example, the dielectric included in the central member 150 may include a high-k dielectric having a dielectric constant of 3.9 or more. The high-k dielectric is not particularly limited as long as it is used in the art, but examples of the high-k dielectric may include one or more from the group consisting of boron nitride, hafnium oxide, hafnium silicon oxide, hafnium aluminum oxide, lanthanum oxide, lanthanum aluminum oxide, zirconium oxide, zirconium silicon oxide, tantalum oxide, titanium oxide, barium strontium titanium oxide, barium titanium oxide, strontium titanium oxide, yttrium oxide, aluminum oxide, lead scandium tantalum oxide, and lead zinc niobate, but is not limited thereto. When the dielectric included in the central member 150 includes a high-k dielectric, the radioisotope battery may be designed to have a high degree of integration while minimizing the occurrence of leakage current.

In one example, an aspect ratio of the central member 150, if provided, may be 1 to 100. In cases where the central member 150 is cylindrical, the aspect ratio of the central member 150 may refer to a value obtained by dividing the length of the central member 150 by its diameter. In one example, in cases where the central member 150 is an elliptical cylinder or a polygonal cylinder, the aspect ratio of the central member 150 may refer to a value obtained by dividing a length of the central member 150 by a major axis of the elliptical cross section or a major side length of the polygonal cross-section.

In one example, by adjusting the aspect ratio of the central member 150, the integration of the radioisotope battery including the electrode assembly 10 may be increased to improve the output or improve the energy density.

FIGS. 18 and 19 are perspective views illustrating a radioisotope battery 100 according to an example embodiment.

The radioisotope battery 100 according to an example embodiment may include the electrode assembly 10 described above; a housing 20 that accommodates the electrode assembly 10; and a cap assembly 30 that is provided to cover an open upper portion of the housing 20.

In one example, the housing 20 may be cylindrical, and the wound electrode assembly 10 may be accommodated within the housing 20. A diameter of the housing 20 may be formed larger than that of the electrode assembly 10. A separate insulating member or shielding member may be further included in the space between the electrode assembly 10 and the housing 20. The insulating member may include a material included in the insulating layer, but is not limited thereto. The shielding member may include a material included in the protective layer, but is not limited thereto.

In one example, the housing 20 may be a metal or alloy that has radiation shielding properties and is conductive, and may include, for example, a metal including aluminum, steel, stainless steel, or lead, or an alloy thereof, but is not limited thereto.

In one example, the first electrode tab 115 or the first joint parts 117 may be welded and electrically connected to a lower closing part of the housing 20. Otherwise, the second electrode tab 116 or the second joint parts 118 may be welded and electrically connected to the lower closing part of the housing 20. The welding may utilize a welding method of electrode tabs and/or leads commonly used in secondary batteries, and may use laser welding, for example. The housing 20 may be electrically connected to the first electrode 111 or the second electrode 112 of the electrode assembly 10.

In one example, the lower closed portion of the housing 20 may additionally include various types of insulating member or shielding member as long as they do not interfere with the electrical connection of the first electrode 111 or the second electrode 112.

In one example, the cap assembly 30 is configured to seal the housing 20 in which the electrode assembly 10 is accommodated. The cap assembly 30 may be a metal or alloy that has radiation shielding properties and is conductive, like the housing 20, and the description of the metal or alloy described above may be applied equally.

In one example, the cap assembly 30 may be electrically connected by welding the first electrode tab 115 or the first joint parts 117, or the second electrode tab 116 or the second joint parts 118. The cap assembly 30 may be electrically connected to the first electrode 111 or the second electrode 112 of the electrode assembly 10. In this case, when the cap assembly 30 is electrically connected to the first electrode 111, the housing 20 may be electrically connected to the second electrode 112, and conversely, when the cap assembly 30 is electrically connected to the second electrode 112, the housing 20 may be electrically connected to the first electrode 111.

The cap assembly 30 may further include a heat dissipation member or a venting member that discharges heat or gas generated within the housing 20.

The radioisotope battery 100 according to an example embodiment may be applied to electronic products requiring high power by generating high-density energy. Electronic products requiring high power may be all of the power-consuming products, for example, semiconductor memories such as DRAM or NAND flash, processors, mobile devices, and computers.

The radioisotope battery 100 according to an example embodiment may be a cylindrical radioisotope battery, and may be, for example, 18650 cell (diameter 18 mm, height 65 mm, form factor ratio 0.277), 21700 cell (diameter 21 mm, height 70 mm, form factor ratio 0.300), 46110 cell (diameter 46 mm, height 110 mm, form factor ratio 0.418), 48750 cell (diameter 48 mm, height 75 mm, form factor ratio 0.640), 48110 cell (diameter 48 mm, height 110 mm, form factor ratio 0.418), 48800 cell (diameter 48 mm, height 80 mm, form factor ratio 0.600), 46800 cell (diameter 46 mm, height 80 mm, form factor ratio 0.575), 46900 cell (diameter 46 mm, height 90 mm, form factor ratio 0.511), 46950 cells (diameter 46 mm, height 95 mm, form factor ratio 0.484), 46100 cells (diameter 46 mm, height 100 mm, form factor ratio 0.460), and 46120 cells (diameter 46 mm, height 120 mm, form factor ratio 0.383), but is not limited thereto. Here, the form factor ratio means a value obtained by dividing the diameter of the cylindrical battery by the height.

A battery pack according to an example embodiment may include the radioisotope battery 100. The battery pack may further include a battery module including the radioisotope battery 100, or may include a battery pack structure (cell to pack; CTP) that omits the module and includes the radioisotope battery 100.

In one example, the battery pack may include a pack housing, and may further include a cell frame that is accommodated in the pack housing. The cell frame may serve to support and accommodate the cylindrical radioisotope batteries 100. The battery pack may further include a top plate on the upper portion of the pack housing, and the battery pack may further include a heat dissipation member capable of dissipating heat generated from the radioisotope battery 100 to the outside.

In one example, the battery pack and/or battery module may be applied in the same manner as the components, shapes, and materials used in the conventional secondary battery, but may further include a radiation shielding component to prevent external leakage of radiation because the radioactive isotope is used.

While various example embodiments of the present invention have been illustrated and described above, it will be apparent to those skilled in the art that modifications and variations could be made without departing from the scope of the present invention as defined by the appended claims. In addition, the example embodiments may be implemented by deleting some components from the above-described example embodiments, and each embodiment may be implemented in combination with each other.

### List of reference numerals:

10 - electrode assembly
20 - housing
30 - cap assembly
111 - first electrode
112 - second electrode
113 - groove (in first electrode)
114 - groove (in second electrode)
115 - first electrode tab
116 - second electrode tab
117 - first joint parts
118 - second joint parts
120 - radioactive source
130 - energy conversion layer
131 - first energy conversion layer
132 - second energy conversion layer
140 - protective layer
150 - central member
160 - Insulating layer
161 - first uncoated part
162 - second uncoated part
170 - the third electrode
180 - the seed layer or catalyst particle layer

## Claims

1. An electrode assembly (10) comprising:
a first electrode (111),
a second electrode (112),
an energy conversion layer (130) provided between the first electrode (111) and the second electrode (112), and
a radioactive source (120) provided in a space between the first electrode (111) and the energy conversion layer (130), and/or a space between the second electrode (112) and the energy conversion layer (130),
wherein the electrode assembly (10) is a jelly roll type electrode assembly in which the first electrode (111), the second electrode (112), the energy conversion layer (130) and the radioactive source (120) are laminated and wound in one direction around a central axis (C) of the electrode assembly.

2. The electrode assembly of claim 1, further comprising an insulating layer (160) on a surface of at least one of the first electrode (111) and the second electrode (112), not facing the radioactive source (120).

3. The electrode assembly of claim 1 or 2, further comprising a central member (150) having the central axis (C), wherein the first electrode (111), the second electrode (112), the energy conversion layer (130) and the radioactive source (120) are laminated and wound in one direction around the central member (150).

4. The electrode assembly of any one of claims 1 to 3, wherein at least one of the first electrode (111) and the second electrode (112) comprises a groove (113, 114) on a surface facing the energy conversion layer (130), and the radioactive source (120) is provided in the groove (113, 114).

5. The electrode assembly of claim 4, wherein the groove (113, 114) is provided in plurality, and the plurality of grooves are arranged spaced apart from each other.

6. The electrode assembly of any one of claims 1 to 5, wherein the radioactive source (120) is provided on a surface of at least one of the first electrode (111) and the second electrode (112) facing the energy conversion layer (130).

7. The electrode assembly of any one of claims 1 to 6, further comprising:
a third electrode (170) provided between the energy conversion layer (130) and the radioactive source (120).

8. The electrode assembly of any one of claims 1 to 7, wherein the energy conversion layer (130) comprises a first energy conversion layer (131) including a type-I semiconductor adjacent to the first electrode (111), and a second energy conversion layer (132) including a type-II semiconductor adjacent to the second electrode (112).

9. The electrode assembly of claim 8, wherein one of the type-I and type-II semiconductor is a P-type semiconductor and the other of the type-I and type-II semiconductor is an N-type semiconductor, such that a P-N junction is defined at an interface between the P-type semiconductor and the N-type semiconductor.

10. The electrode assembly of claim 8 or 9, wherein the first electrode (111) is in contact with at least a portion of the first energy conversion layer (131), and
the second electrode (112) is in contact with at least a portion of the second energy conversion layer (132).

11. The electrode assembly of any one of the preceding claims, wherein the first electrode (111) and the second electrode (112) respectively comprise a first electrode tab (115) and a second electrode tab (116) on at least a portion of a surface opposite to the surface facing the energy conversion layer (130).

12. The electrode assembly of any one of claims 8 to 11, insofar as dependent upon claim 8, wherein the radioactive source (120) is in contact with the first energy conversion layer (131) forming an interface with an undulating profile.

13. The electrode assembly of any one of the preceding claims, further comprising:
a protective layer (140) disposed on a surface of the first electrode (111) and/or the second electrode (112), not facing the radioactive source (120).

14. A radioisotope battery, comprising:
the electrode assembly (10) of any one of the preceding claims;
a housing (20) accommodating the electrode assembly (10); and
a cap assembly (30) provided to cover an open upper portion of the housing (20).

15. A battery pack comprising the radioisotope battery of claim 14.
